# EUROPEAN PATENT SPECIFICATION

(11) **EP 3 351 659 B1**
(45) Date of publication and mention of the grant of the patent: **13.11.2019**
(21) Application number: 16846663.9
(22) Date of filing: 16.09.2016
(51) Int. Cl.: C25B 11/06, C25B 1/10, C25B 11/03, C25B 11/04, C25B 1/02, C25B 1/04, C25B 9/08, C25B 9/20

(54) **POSITIVE ELECTRODE FOR WATER ELECTROLYSIS, ELECTROLYSIS CELL AND METHOD FOR PRODUCING POSITIVE ELECTRODE FOR WATER ELECTROLYSIS**
POSITIVE ELEKTRODE FÜR WASSERELEKTROLYSE, ELEKTROLYSEZELLE UND VERFAHREN ZUR HERSTELLUNG EINER POSITIVEN ELEKTRODE FÜR WASSERELEKTROLYSE
ÉLECTRODE POSITIVE POUR L'ÉLECTROLYSE DE L'EAU, CELLULE D'ÉLECTROLYSE ET PROCÉDÉ DE PRODUCTION D'ÉLECTRODE POSITIVE POUR L'ÉLECTROLYSE DE L'EAU

(30) Priority: 18.09.2015 JP 2015185812
(43) Date of publication of application: 25.07.2018
(73) Proprietor: Asahi Kasei Kabushiki Kaisha, Tokyo 100-0006 (JP); National University Corporation Yokohama National University, Yokohama-shi, Kanagawa 240-8501 (JP)
(72) Inventor: HIRANO, Toshiyuki, Tokyo 101-8101 (JP); FUJIMOTO, Norikazu, Tokyo 101-8101 (JP); MITSUSHIMA, Shigenori, Yokohama-shi Kanagawa 240-8501 (JP); MATSUZAWA, Koichi, Yokohama-shi Kanagawa 240-8501 (JP); BI, Jiajin, Yokohama-shi Kanagawa 240-8501 (JP)
(74) Representative: dompatent von Kreisler Selting Werner - Partnerschaft von Patent- und Rechtsanwälten mbB
(86) International application number: PCT/JP2016/077550
(87) International publication number: WO 2017/047792

(56) References cited:
- WO-A1-2005/014166
- WO-A1-2013/191140
- WO-A1-2015/007716
- WO-A1-2015/064644
- WO-A1-2015/064644
- WO-A1-2017/179473
- JP-A- 2013 505 363
- JP-A- 2014 203 809
- JP-A- 2014 530 292
- US-A- 4 497 698
- Md Mamoon Rashid ET AL: "Hydrogen Production by Water Electrolysis: A Review of Alkaline Water Electrolysis, PEM Water Electrolysis and High Temperature Water Electrolysis", International Journal of Engineering and Advanced Technology (IJEAT), 1 February 2015 (2015-02-01), pages 80-93, XP055509431, Retrieved from the Internet: URL:http://citeseerx.ist.psu.edu/viewdoc/d ownload?doi=10.1.1.673.5912&rep=rep1&type= pdf [retrieved on 2018-09-25]
- HALL D E: "Alkaline Water Electrolysis Anode Materials", JOURNAL OF THE ELECTROCHEMICAL SOCIETY,, vol. 132, no. 2, 1 February 1985 (1985-02-01), pages 41C-48C, XP001297761,
- A K Norman ET AL: "The preparation of the single-phase perovskite LaNiO3", Journal of Materials Processing Technology, 30 August 1999 (1999-08-30), pages 91-96, XP055509235, DOI: 10.1016/S0924-0136(99)00187-9 Retrieved from the Internet: URL:https://doi.org/10.1016/S0924-0136(99) 00187-9 [retrieved on 2018-09-24]
- M. SIEMONS ET AL: "Preparation of Nanosized Perovskite-type Oxides via Polyol Method", ZEITSCHRIFT FUR ANORGANISCHE UND ALLGEMEINE CHEMIE., vol. 630, no. 12, 21 October 2004 (2004-10-21), pages 2083-2089, XP055509422, DE ISSN: 0044-2313, DOI: 10.1002/zaac.200400300
- SACHI TANIGUCHI: 'Ion Dodentai ni Okeru Ion no Kakusan Kiko to Netteki Seishitsu no Kenkyu' HAKASE RONBUN 25 March 2011, page 13, XP009505729

## Description

### Technical Field

The present invention relates to an anode for water electrolysis, an electrolytic cell where the anode for water electrolysis is used, and a method for producing an anode for water electrolysis.

### Background Art

In recent years, hydrogen produced by utilizing renewable energy has attracted attention as clean energy for solving problems about global warming due to CO₂ and a reduction in the amount of deposit of fossil fuel. Production of hydrogen utilizing renewable energy is demanded to be made at a low cost comparable with the cost of conventional production of hydrogen by reforming of fossil fuel. Therefore, production of hydrogen utilizing renewable energy is demanded to achieve a high energy efficiency and inexpensive facilities which have not been able to be accomplished in a conventional art.

Methods for producing hydrogen which can meet the above demands include electrolysis of water (water electrolysis). For example, several designs have been proposed where hydrogen is produced by water electrolysis utilizing power generation using natural energy such as wind power or sunlight, and stored or transported.

In electrolysis of water, electric current is applied to water to thereby generate oxygen in an anode and generate hydrogen in a cathode. Main energy loss factors in such electrolysis include anode and cathode overvoltages. Such overvoltages can be reduced to thereby allow hydrogen to be efficiently produced. In particular, the anode overvoltage is higher than the cathode overvoltage, and a research and development focused on a reduction in anode overvoltage is widely extended.

An anode for generating oxygen in water electrolysis is required to not only be low in the overvoltage in oxygen generation, but also hardly cause the substrate and the catalyst of the anode to be corroded and dissolved in an electrolytic solution even in a potential environment where oxygen is generated. Therefore, a noble metal such as a platinum group metal, nickel, an oxide mainly containing nickel, and the like are commonly used in the material of the anode. In particular, nickel or an oxide mainly containing nickel is suitably used because its material price is relatively low.

When an anode in which nickel or an oxide mainly containing nickel is used is adopted, however, the anode is not sufficiently low in the overvoltage in oxygen generation as compared with an anode in which a platinum group element is used. Therefore, studies are made focusing on an oxide including a nickel element and having a relatively high conductivity.

Patent Literature 1 discloses an electrolytic cell in which a metal oxide having a perovskite structure is used in an electrode. Patent Literature 2 discloses a perovskite-type oxide used as anode material and suitable for water electrolysis and comprising lanthanum nickelate obtained by a coprecipitation process that comprises preparing a solution of a rare-earth metal salt and of a nickel salt and calcining to form a metal oxide with a perovskite structure. Patent Literature 3 discloses an anode for water electrolysis comprising a nickel porous substrate and a lithium nickel oxide.

In addition, Non Patent Literature 1 discloses a method including spray-coating a heated substrate with a precursor solution, to thereby prepare an anode for water electrolysis in which a metal oxide having a perovskite structure is used. Non Patent Literature 2 and 3 review the state of the art of the hydrogen production by water electrolysis and the anode materials for water electrolysis, respectively.

### Citation List

### Patent Literature

Patent Literature 1: Japanese Patent Laid-Open No. 2009-179871
Patent Literature 2: US 4 497 698 A
Patent Literature 3: WO 2015/064644 A1

### Non Patent Literature

Non Patent Literature 1: International Journal of Hydrogen Energy, 1995, 20, 203-210
Non Patent Literature 2: International Journal of Engineering and Advanced Technology (IJEAT), 2015, 80-93
Non Patent Literature 3: Journal of the Electrochemical Society, 1985, 132, 2, 41C-48C.

### Summary of Invention

### Technical Problem

The electrode including the oxide having a perovskite structure described in Patent Literature 1 above, however, does not have a sufficient durability. And it is prepared by mixing a polymer binder with a metal oxide particle synthesized in advance, and pressing the mixture on a stainless mesh. Therefore, a thick layer of the metal oxide is formed around a SUS substrate, and the electrode has problems of an increase in electric resistance and an increase in overvoltage. Furthermore, the electrode also has a problem that the remaining binder component acts as the electric resistance to cause an increase in overvoltage. In addition, there is also a problem that the metal oxide is easily peeled from the substrate.

The electrode described in non Patent Literature 1 is not an electrode used with the source of an energy unstably supplied, such as natural energy, and it does not disclose a mode and a production method of a metal oxide thin film which are required in order to realize durability in a long period electrolysis where the stoppage and restarting of electrolysis can frequently occur.

The present invention has been made in view of such problems, and an object thereof is to provide an anode for water electrolysis, which is low in the overvoltage in oxygen generation (hereinafter, referred to as "oxygen overvoltage".) and which has a high durability even in electrolysis using an energy unstably supplied, such as natural energy, as well as a method for producing the anode.

### Solution to Problem

The present inventors have made intensive studies, and as a result, have found that, by forming a thin film including a perovskite structure metal oxide having a composition represented by formula (1) on the surface of a porous nickel substrate, an anode for water electrolysis, which has a low oxygen overvoltage, which is excellent in durability, which can be used in electrolysis using an energy unstably supplied, such as natural energy, and which is also inexpensive can be obtained, thereby leading to completion of the present invention.

LnNiₓCO₍₁₋ₓ₎O₃ ... (1)

(in formula (1), Ln is a metal element including a rare-earth element, and x satisfies 0 < x ≤ 1)

That is, the present invention is as as set out in the appended claims.

### Advantageous Effects of Invention

The present invention provides an anode for water electrolysis, which has a low oxygen overvoltage, which is excellent in durability and which is inexpensive, as well as a water electrolysis cell including this anode for water electrolysis.

### Brief Description of Drawings

[Figure 1] Figure 1 illustrates a schematic cross-sectional view of one example of an electrolytic cell of the present embodiment.
[Figure 2] Figure 2 illustrates a schematic cross-sectional view of one example of a bipolar electrolytic bath of the present embodiment.

### Description of Embodiments

Hereinafter, an embodiment (hereinafter, referred to as "the present embodiment") for carrying out the present invention will be described in detail.

The following present embodiment is illustrative for describing the present invention.

First, a water electrolysis anode is described.

A water electrolysis anode according to the present invention includes a porous nickel substrate, a thin film formed on at least a part of the surface thereof and including a perovskite structure metal oxide, and a nickel oxide layer between the porous nickel substrate surface and the thin film.

The thin film in the present embodiment means a thin film whose thickness is less than that of the substrate. The thin film including the metal oxide in the present embodiment preferably covers 90% or more of the substrate surface, and most preferably fully covers the entire thereof.

In a first feature of the present embodiment, a porous nickel substrate is used for the substrate.

The porous nickel substrate is a plate-like substrate which is formed by nickel or a material mainly containing nickel and which has a large number of pores. Examples of the material mainly containing nickel include nickel-based alloys such as Monel, Inconel and Hastelloy. Specific forms thereof include an expanded metal, a punching metal, a plain-woven mesh, a foamed metal, or a similar form thereof.

The pore size is not limited, and can be about 0.1 mm² or more and 5.0 mm² or less. The opening ratio is preferably 20% or more. The opening ratio here means the proportion of an opening per area. The upper limit of the opening ratio is not particularly limited, and may be, for example, about 80% or less.

The material of the substrate is preferably nickel or the material mainly containing nickel. Nickel or the material mainly containing nickel is preferable in terms of durability, conductivity and economic efficiency because they are metals which are not dissolved even at an oxygen-generating potential in an alkali aqueous solution and which are inexpensively available as compared with noble metals.

The porous nickel substrate is preferably an expanded metal including nickel or the material mainly containing nickel, and the thickness thereof is preferably from 0.2 to 2.0 mm, more preferably from 1.0 to 1.5 mm.

The perovskite structure metal oxide generally has a composition represented by ABO₃.

In the perovskite structure metal oxide for use in the present embodiment, a rare-earth element is placed in at least a part of the A site. In addition, Ni is located at the B site and may be partially replaced with Co, and its composition is represented by the following formula (1).

LnNiₓCO₍₁₋ₓ₎O₃ ... (1)

In formula (1), Ln is a metal element including a rare-earth element (not limited to lanthanoid), preferably including La. Ln may be constituted by only a rare-earth element, or may be constituted by a plurality of elements including a rare-earth element. For example, Ln can be mainly a rare-earth element and can be partially replaced with an alkali earth metal element such as Sr or Ba, thereby enhancement in conductivity can be expected.

The proportion of such an element replaced, other than the rare-metal element, is not limited, and may be, for example, less than 50% by mol, less than 30% by mol or less than 10% by mol.

In the present embodiment, as the perovskite structure metal oxide, one in which Ni, which can form a stable oxide at an oxygen-generating potential, is located at the B site can be used to thereby allow a high durability to be realized. The same effect is, of course, exerted also in a case where Co is located at a part of the B site, and therefore Co may also be located at a part of the B site.

In formula (1), the x value is required to be more than 0 and 1 or less, preferably 0.4 or more, more preferably 0.5 or more, further preferably 0.6 or more.

In the present embodiment, the thin film including the metal oxide having a composition represented by formula (1) (hereinafter, sometimes referred to as "metal oxide thin film") is mainly formed by the metal oxide having a composition represented by formula (1), and may also include other inorganic compound, and/or other component such as a metal or an alloy. The content of such a component other than the metal oxide having a composition represented by formula (1) (other component) in the metal oxide thin film is not limited, and is preferably 50% by mass or less, more preferably 30% by mass or less.

Examples of such other inorganic compound include a metal oxide such as nickel oxide or lanthanum oxide, or a mixture thereof.

If the thickness of the metal oxide thin film is too high, an increase in electric resistance may be caused to result in an increase in overvoltage, and on the contrary, if the thickness is too low, the metal oxide may be dissolved or dropped off due to a long-term electrolysis and/or the stoppage of electrolysis, thereby causing electrode degradation to result in an increase in overvoltage.

For such reasons, the thickness of the metal oxide thin film is preferably 0.2 µm or more and 10 µm or less, more preferably 0.5 µm or more and 5 µm or less.

The thickness of the metal oxide thin film can be herein measured by, for example, observing the cross section of an electrode by an electron microscope. Specifically, the cross section of an electrode is observed by an electron microscope, the thickness of the metal oxide thin film is measured at five points, and the average of measurement values at such five points is defined as the thickness of the metal oxide thin film.

If the adhesion amount of the metal oxide having a composition represented by formula (1) on the substrate is too large, an increase in electric resistance may be caused to result in an increase in overvoltage, and therefore the adhesion amount of the metal oxide is preferably 50 g/m² or less, more preferably 30 g/m² or less.

On the other hand, if the adhesion amount of the metal oxide having a composition represented by formula (1) is too small, the metal oxide may be dissolved or dropped off due to a long-term electrolysis and/or the stoppage of electrolysis, thereby causing electrode degradation to result in an increase in overvoltage, and therefore the adhesion amount of the metal oxide attached is preferably 2 g/m² or more, more preferably 5 g/m² or more.

If the crystallite diameter D of the metal oxide having a composition represented by formula (1) is small, the grain boundary carrier recombination occurs, thereby resulting in deterioration in conductivity. Such deterioration in conductivity may result in an increase in overvoltage. Accordingly, the average of the crystallite diameter D of the metal oxide having a composition represented by formula (1) included in the metal oxide thin film is preferably 2 nm or more, more preferably 5 nm or more.

On the other hand, if the crystallite diameter D is too large, the number of active sites may decrease to thereby result in an increase in overvoltage, and therefore the crystallite diameter D is preferably 50 nm or less, more preferably 20 nm or less.

The crystallite diameter D (hkl) can be calculated according to the Scherrer's equation, namely, D (hkl) = 0.9 λ/(β_{1/2}·Cosθ): where hkl represents the miller index, λ represents the wavelength of characteristic X-ray (nm), β_{1/2} represents the half-power band width (radian) of the (hkl) plane, and θ represents the X-ray reflection angle. Accordingly, the average crystallite diameter D of the metal oxide having a composition represented by formula (1), included in the metal oxide thin film, can be determined by measuring the half-power band width β_{1/2} of the (hkl) plane, corresponding to an X-ray diffraction peak having the maximum intensity among the X-ray diffraction peaks of the metal oxide.

The crystal structure of the metal oxide having a composition represented by formula (1), included in the metal oxide thin film, is not particularly limited as long as it is a perovskite structure. The unit lattice of a perovskite structure metal oxide generally has a cubic structure or tetragonal structure which is a slightly distorted cubic structure, orthorhombic, monoclinic or hexagonal crystal structure. Although the detail is unclear, a metal oxide thin film which has a low oxygen overvoltage is obtained when a trigonal metal oxide is included, and therefore the metal oxide having a composition represented by formula (1) preferably includes a trigonal crystal structure as the unit lattice.

If the specific surface area (specific surface area of the entire anode including the substrate) of the anode for water electrolysis is small, the number of reactive active sites per unit area may be too small to realize a low overvoltage. On the other hand, if the specific surface area of the anode for water electrolysis is too large, the mechanical strength of a catalyst layer may decrease to result in deterioration in durability. Therefore, in the present embodiment, the specific surface area of the anode for water electrolysis is preferably 0.001 m²/g or more and 1 m²/g or less, more preferably 0.005 m²/g or more and 0.1 m²/g or less.

The specific surface area can be measured by using, for example, a BET method. A measurement sample is placed in a dedicated cell, and subjected to a pre-treatment by heating and evacuation for removal of an adsorbate onto the surface of a pore in advance. Thereafter, the adsorption/desorption isotherm curve of gas adsorption to the measurement sample at -196°C is determined. The resulting adsorption/desorption isotherm curve can be analyzed by a BET method, thereby determining the specific surface area of the measurement sample.

If the film resistance of the anode for water electrolysis is too high, an increase in overvoltage is caused in electrolysis under a high current density condition for achieving of a high energy efficiency, and therefore the film resistance is preferably 2 Ω·cm² or less, more preferably 0.5 Ω·cm² or less. On the other hand, if the film resistance is too low, no current flows on some portion in the metal oxide thin film and a surface of the metal oxide that is not used for electrolytic reaction increase, thereby resulting in an increase in overvoltage, and therefore the film resistance is preferably 0.01 Ω·cm² or more.

The film resistance can be here measured by, for example, an electrochemical impedance method.

According to the present invention, a nickel oxide layer is further provided between the substrate and the metal oxide thin film, thereby resulting in an enhancement in durability.

A base structure of the perovskite structure, which is the crystal structure of the metal oxide, is a cubic structure. A layer of nickel oxide having a cubic structure as a base structure as in the metal oxide thin film is interposed between the substrate and the metal oxide thin film, thereby resulting in an enhancement in adhesiveness between the substrate and the metal oxide thin film.

In order to enhance such adhesiveness, the thickness of the nickel oxide layer is preferably 50 nm or more, more preferably 100 nm or more. On the other hand, if the nickel oxide layer is too thick, an increase in electric resistance may be caused to result in an increase in overvoltage, and therefore the thickness of the nickel oxide layer is preferably 3000 nm or less, more preferably 5000 nm or less.

Next, an electrolytic cell of the present invention is described.

The electrolytic cell of the present embodiment preferably includes at least an anode for water electrolysis, and a cathode electrically connected thereto.

Furthermore, in the present embodiment, the electrolytic cell is preferably a cell forming a bipolar electrolytic bath. The bipolar electrolytic bath refers to an electrolytic bath including a plurality of electrolytic cells (at least one pair of electrolytic cells) connected in series via an ion permeable diaphragm (hereinafter, simply referred to as "diaphragm".) being interposed therebetween. The "plurality of electrolytic cells connected in series" means that a plurality of electrolytic cells is disposed so that anodes and cathodes included in the respective electrolytic cells are alternately arranged in a predetermined direction. Such an electrolytic bath having a multiple electrolytic cells arranged in series is also sometimes simply called "electrolytic bath".

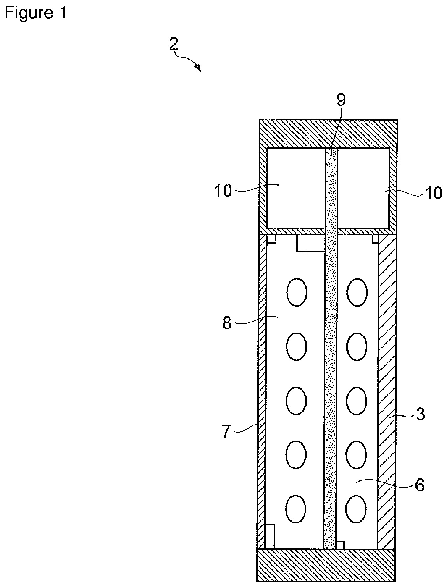

Figure 1 illustrates a schematic cross-sectional view of one example of an electrolytic cell 2 for a bipolar electrolytic bath of the present embodiment, the electrolytic cell being a member forming the bipolar electrolytic bath. The electrolytic cell 2 has a pair of electrodes: an anode 7 and a cathode 3.

In the electrolytic cell 2, a cathode chamber frame to which the cathode 3 is mounted and an anode chamber frame to which the anode 7 is mounted are disposed via a partition 9 being interposed therebetween. In other words, the anode chamber 8 and the cathode chamber 6 are partitioned by the partition 9. An electrolytic solution is fed to the anode chamber 8 and the cathode chamber 6. In addition, a gas-liquid separation chamber 10 for the separation of generated gas and liquid is present at the upper portion of the electrolytic cell 2.

The electrolytic solution is not limited, and one commonly used in water electrolysis can be used. Examples include an aqueous potassium hydroxide solution and an aqueous sodium hydroxide solution. The electrolyte concentration is preferably 1 N or more and 12 N or less, more preferably 6 N or more and 10 N or less.

The material forming the cathode 3 is not particularly limited, and a material containing at least one selected from the group consisting of a noble metal, a noble metal oxide, nickel, cobalt, manganese and molybdenum is suitably used.

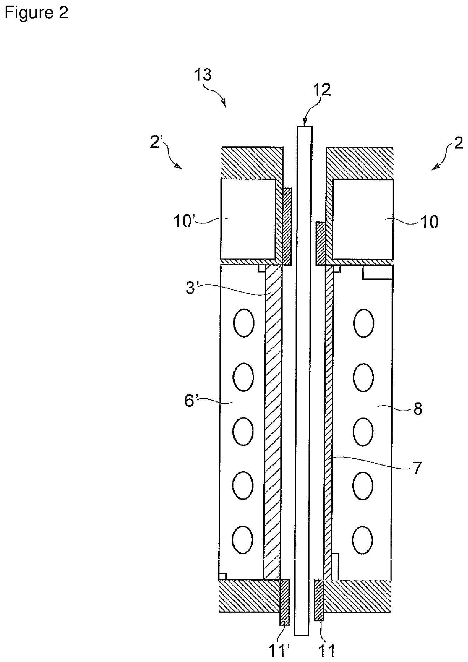

Figure 2 illustrates a schematic cross-sectional view of a part (electrode cell 2 and electrode cell 2') of a bipolar electrolytic bath formed by a plurality of electrode cells. In the bipolar electrolytic bath, a plurality of electrode cells are disposed so that an anode chamber and a cathode chamber are opposite to each other via a diaphragm being interposed therebetween, and are connected in series as illustrated in Figure 2 (in Figure 2, an anode chamber 8 of the electrolytic cell 2, a diaphragm 12, and a cathode chamber 6' of the electrolytic cell 2' are arranged in this order in series.), and gaskets are disposed at the anode/cathode chamber sides of each electrolytic cell (in Figure 2, gaskets 11 and 11' are disposed at the anode chamber 8 of the electrode cell 2 and the cathode chamber 6' of the electrode cell 2', respectively).

The electrolytic solution is fed to each of the anode chamber of one electrolytic cell and the cathode chamber of other electrolytic cell (in Figure 2, anode chamber 8 and cathode chamber 6'). The anode of one electrolytic cell and the cathode of another electrolytic cell adjacent thereto, the electrolytic cells being isolated by a diaphragm, (in Figure 2, the anode 7 of the electrolytic cell 2 and the cathode 3' of the electrolytic cell 2') are electrically connected to perform electrolysis.

The material of the diaphragm is not limited, and examples thereof include sulfone group-containing aromatic polymers such as polysulfone, polyethersulfone and polyphenylsulfone, and fluoropolymers such as PTFE and ETFE.

Next, a method for producing hydrogen according to the present invention is described.

In the present embodiment, current is applied to the above-mentioned electrolytic cell (bipolar electrolytic bath) including an anode, a cathode and an electrolytic solution, to perform water electrolysis, thereby producing hydrogen in the cathode. As the power supply here, for example, a variable power supply can be used. The variable power supply means a power supply from a renewable energy generation plant and whose output is changed in several seconds to several minutes, unlike a power supply stably output, such as a system power. The method of renewable energy generation is not particularly limited, and examples thereof include solar power generation and wind power generation.

For example, in the case of electrolysis using the bipolar electrolytic bath of Figure 2, a cationic electrolyte in the electrolytic solution moves from the anode chamber 8 of the electrolytic cell 2 through the diaphragm 12 to the cathode chamber 6' of the adjacent electrolytic cell 2', and an anionic electrolyte therein moves from the cathode chamber 6' of the electrolytic cell 2' through the diaphragm 12 to the anode chamber 8 of the adjacent electrolytic cell 2. Thus, current in electrolysis flows in a direction where the electrolytic cells 2 and 2' are connected in series. In other words, current flows from the anode chamber 8 of one electrolytic cell 2 toward the cathode chamber 6' of the adjacent electrolytic cell 2' via the diaphragm 12. According to such electrolysis, an oxygen gas is generated in the anode chamber 8 and a hydrogen gas is generated in the cathode chamber 6'.

### (Method for producing anode for water electrolysis)

A method for producing an anode for water electrolysis according to the present invention and as described above includes step 1 of coating a porous nickel substrate surface with a solution including a rare-earth metal salt and a nickel salt to thereby form a precursor layer, and step 2 of calcining the precursor layer to thereby form a thin film including a perovskite structure metal oxide.

Examples of the rare-earth metal salt included in the solution used in the step 1 can include halide salts such as fluoride, chloride, bromide and iodide of a rare-earth element metal such as lanthanum, inorganic compound salts such as nitrate, sulfate and phosphate, and organic compound salts typified by acetate.

In particular, chloride and nitrate are preferably used because raw materials thereof are industrially available. Furthermore, nitrate is more preferably used because the degradation of the substrate caused by an anionic component remaining after decomposition is small and an anode having a favorable storage stability can be obtained.

The solvent of the solution may be any solvent as long as it can dissolve the rare-earth metal salt and the nickel salt which are solutes. A high-concentration solution can result in an increase in the amount of coating, thereby enhancing productivity, and therefore the solution preferably includes at least one selected from the group consisting of water and alcohols having from 2 to 5 carbon atoms.

If the concentrations of the rare-earth metal salt and the nickel salt in the solution are low, high energy is required for vaporization of the solvent. On the other hand, if the concentrations of the rare-earth metal salt and the nickel salt are high, variation in thickness may be caused, thereby resulting in an uneven thickness of a metal catalyst layer. Therefore, the concentration of the rare-earth metal salt in the solution used in the step 1 is preferably 0.02 mol/L or more and 1 mol/L or less, more preferably 0.05 mol/L or more and 0.5 mol/L.

Similarly, the concentration of the nickel salt is preferably 0.02 mol/L or more and 1 mol/L or less, more preferably 0.05 mol/L or more and 0.5 mol/L.

Various known procedures can be used for the method for coating the substrate surface with the solution in the step 1. Examples include a dipping method including dipping the substrate in the solution, a method including coating the substrate with the solution by a brush, a roll method including coating the substrate with a sponge-like roll that is impregnated with the solution, and an electrostatic coating method including oppositely charging a coating liquid and the substrate and performing atomization with a spray or the like. In particular, a roll method and an electrostatic coating method are suitably used from the viewpoints that high productivity is achieved and that a uniform coating on catalyst layer can be achieved.

The substrate may also be subjected to a surface treatment for providing irregularities, before coating with the solution. Such irregularities are provided on the substrate surface, thereby resulting in an enhancement in adhesiveness of the substrate with the metal oxide thin film. The method of the surface treatment is not particularly limited, and examples thereof can include a blasting treatment and etching with a chemical agent.

The temperature at which the precursor layer is calcined in the step 2 is preferably 400°C or more, more preferably 500°C or more because calcination at a temperature of 400°C or more allows pyrolysis of a lanthanoid metal salt and the nickel salt to favorably progress. If calcination is made at a temperature of more than 1000°C, the substrate may be softened and deformed, and therefore the temperature is preferably 1000°C or less, more preferably 800°C or less.

The step 1 and the step 2 are preferably repeated multiple times. A metal oxide thin film having a desired thickness can be formed by only adjustment of the amount of the solution for coating per step or the concentrations of the rare-earth metal salt, the nickel salt and the like in the solution. However, a too large amount of the solution for coating per step or a too high solution concentration may cause variations in thickness not to uniformly form each layer. Therefore, the step 1 and the step 2 can be repeated multiple times to thereby form a more uniform metal oxide thin film layer with a desired thickness. The number of repeated times is not particularly limited as long as a desired thickness is achieved, and the number is preferably 5 or more and 20 or less.

After the step 1 and the step 2 are repeated multiple times, a step of calcination at a temperature equal to or higher than the temperature where the precursor layer is calcined in the step 2 may further be included. The upper limit of the calcination temperature here is preferably 1000°C or less, more preferably 800°C or less.

### Examples

Hereinafter, the present invention will be specifically described with reference to Examples and Comparative Example.

Measurement methods used in Examples and Comparative Example are as follows.

### (Crystal structure)

Measurement was made using an X-ray diffractometer "RINT 2000 Model" manufactured by Rigaku Corporation at an excitation voltage of 40 kV and an excitation current of 200 mA with an operation axis 2θ/θ.

### (Cross section observation and composition analysis)

A test anode was cut by scissors, then the cross section was processed by an argon ion beam using an ion milling apparatus "IM4000" manufactured by Hitachi High-Technologies Corporation, to provide a sample for cross section observation. The resulting sample for cross section observation was observed by an electron microscope "TM3000" manufactured by Hitachi High-Technologies Corporation.

Elemental analysis was performed by an EDS system "QUANTAX70" manufactured by Bruker Corporation.

### (Oxygen overvoltage, film resistance, and potential cycling test)

The oxygen overvoltage of the anode was measured by the following procedure.

A test anode was cut out to a size of 2 cm × 2 cm, and secured to a rod covered with PTFE and made of nickel, by a screw made of nickel. A platinum mesh was used in the counter electrode, and electrolysis was conducted at a current density of 0.05 A/cm² in an aqueous 32% by weight sodium hydroxide solution at 80°C, to measure the oxygen overvoltage. The oxygen overvoltage was measured by a three-electrode method using a Luggin capillary in order to eliminate the influence of the ohmic loss due to the solution resistance. The distance between the tip of the Luggin capillary and the anode was constantly fixed to 1 mm. As the measurement apparatus of the oxygen overvoltage, "1470E System" manufactured by Solartron was used. As the reference electrode of the three-electrode method, silver-silver chloride (Ag/AgCI) was used. The ohmic loss which could not be completely eliminated even using the three-electrode method was measured by a current interrupt method, and the oxygen overvoltage was corrected based on the measurement value of the ohmic loss. The ohmic loss was measured using a constant current pulse generator "HC-2005" manufactured by Hokuto Denko Corp.

Subsequently, the film resistance was measured. The potential where a current density of 0.05 A/cm² was obtained was defined as the holding potential, and AC impedance measurement was performed at an amplitude of 10 mV in the frequency range from 1 Hz to 100 kHz, to calculate the film resistance from the resulting Nyquist plot.

The potential cycling test was performed by the following method.

A potential ranging from -0.9 V to 0.4 V with a silver-silver chloride (Ag/AgCI) electrode as reference was swept 4000 times at a sweep speed of 1 V/sec in an aqueous 32% by weight sodium hydroxide solution at 80°C. Thereafter, the oxygen overvoltage described above was measured.

### (Example 1)

As the substrate, a porous nickel substrate, which is a nickel-expanded metal having a thickness of 1.2 mm and having a plurality of diamond-shaped pores having diagonal line lengths of 1.5 mm and 2.5 mm, at a density of about 14/cm², was prepared. The nickel-expanded metal was subjected to a blasting treatment, thereafter immersed in isopropyl alcohol for a degreasing treatment, subjected to an acid treatment in 6 N hydrochloric acid, and thereafter washed with water and dried.

Next, nickel nitrate hexahydrate and lanthanum nitrate hexahydrate were weighed and blended in so that their concentrations became 0.20 mol/L and 0.20 mol/L, respectively, to prepare a coating liquid formulated.

A tray in which the coating liquid was placed was prepared, a pair of coating rolls (lower coating roll and upper coating roll) made of EPDM and a roller made of PVC were disposed at the upper portion of the tray in tandem in this order from the bottom so that the lower part of the lower coating roll was immersed in the coating liquid, and the lower coating roll and the upper coating roll, as well as the upper coating roll and the roller made of PVC were constantly in contact with each other, and the substrate was coated with the coating liquid (roll method). Specifically, coating was performed so that the substrate was allowed to rapidly pass through between two sponge rolls made of EPDM before the coating liquid with which the lower coating roll was impregnated was dried, not to cause excess of the coating liquid to be attached to the intersections and the like of the mesh of the substrate. Thereafter, drying was performed at 50°C for 10 minutes to form a precursor layer, and thereafter calcination at 500°C for 10 minutes was performed with a muffle furnace to form a metal oxide thin film on the substrate surface.

Such a cycle including roll-coating, drying and calcination was repeated six times, and thereafter calcination at 800°C for 10 minutes was further performed to form a metal oxide thin film.

The adhesion amount of the metal oxide thin film, determined by dividing the change in mass of the substrate before and after the coating by the area of the substrate, was 9.9 g/m², and the film resistance was 0.1 Ω·cm².

In addition, the cross section of the metal oxide thin film was observed, and as a result, the thickness of the metal oxide thin film was about 1 µm. In addition, it was confirmed that an extremely thin nickel oxide layer was formed between the substrate surface and the metal oxide thin film. This nickel oxide layer was considered to be formed in calcination (step 2).

In addition, the metal oxide thin film was subjected to crystal structural analysis described above, and it was thus confirmed that the film mainly included metal oxide (LaNiO₃) having an average crystallite diameter of 9 nm and having perovskite structure with a trigonal unit lattice perovskite structure. In addition, the above electrolysis test was performed, and as a result, the oxygen overvoltage at 0.05 A/cm² was 228 mV.

Furthermore, the oxygen overvoltage was measured after the above described potential cycling test was performed, and it was thus confirmed that the same value as that before the potential cycling test was obtained and a high resistance to the variable power supply was achieved.

### (Examples 2 to 5)

Metal oxide thin film was formed on the porous nickel substrate to form anode for water electrolysis in the same manner as in Example 1 except that the number of cycles including roll-coating, drying and calcination was changed from 6 to each number shown in Table 1. The adhesion amounts of the metal oxide thin film attached and the oxygen overvoltage before and after the potential cycling test here are shown in Table 1.

### (Comparative Example 1)

A nickel-expanded metal having a thickness of 1.2 mm subjected to a blasting treatment in advance was evaluated without being subjected to coating with the coating liquid and calcination.

The above electrolysis test was performed, and as a result, the oxygen overvoltage at 0.05 A/cm² was 260 mV.

The oxygen overvoltage was measured after the above potential cycling test was performed, and it was thus confirmed that the overvoltage was increased as compared with that before the potential cycling test.

**[Table 1]**

| | Number of the cycles | Adhesion amount | Oxygen overvoltage before potential cycling test | Oxygen overvoltage after potential cycling test |
|---|---|---|---|---|
| Example 1 | 6 times | 9.9 g/m2 | 228 mV | 230 mV |
| Example 2 | 2 times | 3.3 g/m2 | 242 mV | 271 mV |
| Example 3 | 3 times | 5.2 g/m2 | 236 mV | 242 mV |
| Example 4 | 17 times | 28 g/m2 | 234 mV | 240 mV |
| Example 5 | 20 times | 32 g/m2 | 254 mV | 261 mV |
| Comparative Example 1 | 0 times | 0 g/m2 | 260 mV | 302 mV |

It was confirmed that each of Examples 1 to 5 exhibited a low oxygen overvoltage and was favorable in terms of practical use. In particular, it was confirmed that each of Examples 1, 3 and 4 exhibited a low overvoltage even after the potential cycling test (after the potential was repeatedly varied) and was excellent in durability.

### Industrial Applicability

The anode of the present invention has a low oxygen-generating potential and exhibits a high energy exchange efficiency in electrolysis of water. Accordingly, the anode can be utilized as an anode for water electrolysis. In particular, the anode can be suitably utilized as an anode for water electrolysis utilizing a variable power supply of electricity generation or the like by natural energy unstably supplied, such as wind power or sunlight.

## Claims

1. An anode for water electrolysis, comprising:
a porous nickel substrate; and
a thin film formed on at least a part of a surface of the substrate and comprising a perovskite structure metal oxide having a composition represented by formula (1):
LnNiₓCO₍₁₋ₓ₎O₃ ... (1)
wherein, Ln is a metal element comprising a rare-earth element, and x satisfies 0 < x ≤ 1,
wherein the anode further comprises a nickel oxide layer between the porous nickel substrate surface and the thin film.

2. The anode for water electrolysis according to claim 1, wherein Ln in formula (1) comprises La.

3. The anode for water electrolysis according to claim 1 or 2, wherein x in formula (1) represents 0.5 or more.

4. The anode for water electrolysis according to any one of claims 1 to 3, wherein a thickness of the thin film is 0.2 µm or more and 10 µm or less.

5. The anode for water electrolysis according to any one of claims 1 to 4, wherein an adhesion amount of the metal oxide is 2 g/m² or more and 50 g/m² or less, wherein the adhesion amount of the metal oxide is determined by dividing the change in mass of the substrate before and after the coating by the area of the substrate.

6. The anode for water electrolysis according to claim 5, wherein the adhesion amount of the metal oxide is 5 g/m² or more and 30 g/m² or less.

7. The anode for water electrolysis according to any one of claims 1 to 6, wherein a crystallite diameter of the metal oxide is 5 nm or more and 100 nm or less.

8. The anode for water electrolysis according to any one of claims 1 to 7, wherein the thin film comprises a perovskite structure metal oxide whose unit lattice is trigonal.

9. The anode for water electrolysis according to any one of claims 1 to 8, wherein a specific surface area of the anode is 0.001 m²/g or more and 1 m²/g or less.

10. The anode for water electrolysis according to any one of claims 1 to 9, wherein a film resistance determined by impedance measurement is 0.01 Ω·cm² or more and 2 Ω·cm² or less.

11. The anode for water electrolysis according to any one of claims 1 to 10, wherein a thickness of the nickel oxide layer is 50 nm or more and 5000 nm or less.

12. The anode for water electrolysis according to any one of claims 1 to 11, wherein the porous nickel substrate is an expanded metal.

13. An electrolytic cell for a bipolar electrolytic bath, comprising the anode for water electrolysis according to any one of claims 1 to 12.

14. A method for producing hydrogen, wherein a variable power supply is input to an electrolytic cell using the anode for water electrolysis according to any one of claims 1 to 12.

15. A method for producing an anode for water electrolysis as defined in claim 1, comprising:
step 1 of coating a porous nickel substrate surface with a solution comprising a rare-earth metal salt and a nickel salt to thereby form a precursor layer; and
step 2 of calcining the precursor layer at a calcination temperature of 400 °C or more to 1000 °C or less to thereby form a thin film comprising a perovskite structure metal oxide.

16. The method for producing an anode for water electrolysis according to claim 15, wherein the rare-earth metal salt comprises a La salt.

17. The method for producing an anode for water electrolysis according to claim 15 or 16, wherein the rare-earth metal salt is nitrate.

18. The method for producing an anode for water electrolysis according to any one of claims 15 to 17, wherein a solvent of the solution comprises at least one selected from the group consisting of water and alcohols having from 2 to 5 carbon atoms.

19. The method for producing an anode for water electrolysis according to any one of claims 15 to 18, wherein a concentration of the rare-earth metal salt is 0.02 mol/L or more and 1 mol/L or less, and a concentration of the nickel salt is 0.02 mol/L or more and 1 mol/L or less.

20. The method for producing an anode for water electrolysis according to any one of claims 15 to 19, wherein the step 1 and the step 2 are repeatedly performed.

## Patentansprüche

1. Anode für Wasserelektrolyse, umfassend:
ein poröses Nickelsubstrat; und
eine dünne Schicht, die auf wenigstens einem Teil einer Oberfläche des Substrats gebildet ist und ein Metalloxid mit Perowskitstruktur umfasst, das eine Zusammensetzung aufweist, die durch Formel (1) dargestellt wird:
LnNiₓCO₍₁₋ₓ₎O₃ (1)
wobei Ln ein Metallelement ist, das ein Seltenerdelement umfasst, und x der Bedingung 0 < x ≤ 1 genügt;
wobei die Anode weiterhin eine Nickeloxidschicht zwischen der porösen Nickelsubstratoberfläche und der dünnen Schicht umfasst.

2. Anode für Wasserelektrolyse gemäß Anspruch 1, wobei Ln in Formel (1) La umfasst.

3. Anode für Wasserelektrolyse gemäß Anspruch 1 oder 2, wobei x in Formel (1) für 0,5 oder mehr steht.

4. Anode für Wasserelektrolyse gemäß einem der Ansprüche 1 bis 3, wobei die Dicke der dünnen Schicht 0,2 µm oder mehr und 10 µm oder weniger beträgt.

5. Anode für Wasserelektrolyse gemäß einem der Ansprüche 1 bis 4, wobei die Anhaftungsmenge des Metalloxids 2 g/m² oder mehr und 50 g/m² oder weniger beträgt, wobei die Anhaftungsmenge des Metalloxids dadurch bestimmt wird, dass man die Änderung der Masse des Substrats vor und nach der Beschichtung durch die Fläche des Substrats dividiert.

6. Anode für Wasserelektrolyse gemäß Anspruch 5, wobei die Anhaftungsmenge des Metalloxids 5 g/m² oder mehr und 30 g/m² oder weniger beträgt.

7. Anode für Wasserelektrolyse gemäß einem der Ansprüche 1 bis 6, wobei der Kristallitdurchmesser des Metalloxids 5 nm oder mehr und 100 nm oder weniger beträgt.

8. Anode für Wasserelektrolyse gemäß einem der Ansprüche 1 bis 7, wobei die dünne Schicht ein Metalloxid mit Perowskitstruktur umfasst, dessen Kristallgitter trigonal ist.

9. Anode für Wasserelektrolyse gemäß einem der Ansprüche 1 bis 8, wobei die spezifische Oberfläche der Anode 0,001 m²/g oder mehr und 1 m²/g oder weniger beträgt.

10. Anode für Wasserelektrolyse gemäß einem der Ansprüche 1 bis 9, wobei der durch Impedanzmessung bestimmte Schichtwiderstand 0,01 Ω·cm² oder mehr und 2 Ω·cm² oder weniger beträgt.

11. Anode für Wasserelektrolyse gemäß einem der Ansprüche 1 bis 10, wobei die Dicke der Nickeloxidschicht 50 nm oder mehr und 5000 nm oder weniger beträgt.

12. Anode für Wasserelektrolyse gemäß einem der Ansprüche 1 bis 11, wobei das poröse Nickelsubstrat ein Streckmetall ist.

13. Elektrolysezelle für ein bipolares Elektrolysebad, umfassend die Anode für Wasserelektrolyse gemäß einem der Ansprüche 1 bis 12.

14. Verfahren zur Herstellung von Wasserstoff, wobei eine variable Stromzufuhr einer Elektrolysezelle zugeführt wird, in der die Anode für Wasserelektrolyse gemäß einem der Ansprüche 1 bis 12 verwendet wird.

15. Verfahren zur Herstellung einer Anode für Wasserelektrolyse gemäß Anspruch 1, umfassend:
Schritt 1 des Beschichtens einer porösen Nickelsubstratoberfläche mit einer Lösung, die ein Seltenerdmetallsalz und ein Nickelsalz umfasst, wodurch eine Vorläuferschicht entsteht; und
Schritt 2 des Kalzinierens der Vorläuferschicht bei einer Kalzinierungstemperatur von 400 °C oder mehr bis 1000 °C oder weniger unter Bildung einer dünnen Schicht, die ein Metalloxid mit Perowskitstruktur umfasst.

16. Verfahren zur Herstellung einer Anode für Wasserelektrolyse gemäß Anspruch 15, wobei das Seltenerdmetallsalz ein La-Salz umfasst.

17. Verfahren zur Herstellung einer Anode für Wasserelektrolyse gemäß Anspruch 15 oder 16, wobei das Seltenerdmetallsalz ein Nitrat ist.

18. Verfahren zur Herstellung einer Anode für Wasserelektrolyse gemäß einem der Ansprüche 15 bis 17, wobei ein Lösungsmittel der Lösung wenigstens eines umfasst, das aus der Gruppe ausgewählt ist, die aus Wasser und Alkoholen mit 2 bis 5 Kohlenstoffatomen besteht.

19. Verfahren zur Herstellung einer Anode für Wasserelektrolyse gemäß einem der Ansprüche 15 bis 18, wobei die Konzentration des Seltenerdmetallsalzes 0,02 mol/l oder mehr und 1 mol/l oder weniger beträgt und die Konzentration des Nickelsalzes 0,02 mol/l oder mehr und 1 mol/l oder weniger beträgt.

20. Verfahren zur Herstellung einer Anode für Wasserelektrolyse gemäß einem der Ansprüche 15 bis 19, wobei Schritt 1 und Schritt 2 wiederholt durchgeführt werden.

## Revendications

1. Anode pour électrolyse d'eau, comprenant :
un substrat de nickel poreux ; et
un film mince formé sur au moins une partie d'une surface du substrat et comprenant un oxyde de métal de structure pérovskite présentant une composition représentée par la formule (1) :
LnNiₓCO₍₁₋ₓ₎O₃ ... (1)
dans laquelle, Ln est un élément de métal comprenant un élément de terre rare, et x satisfait 0 < x ≤ 1,
dans laquelle l'anode comprend de plus une couche d'oxyde de nickel entre la surface de substrat de nickel poreux et le film mince.

2. Anode pour électrolyse d'eau selon la revendication 1, dans laquelle Ln dans la formule (1) comprend La.

3. Anode pour électrolyse d'eau selon la revendication 1 ou 2, dans laquelle x dans la formule (1) représente 0,5 ou supérieur.

4. Anode pour électrolyse d'eau selon l'une quelconque des revendications 1 à 3, dans laquelle une épaisseur du film mince est de 0,2 µm ou supérieure et de 10 µm ou inférieure.

5. Anode pour électrolyse d'eau selon l'une quelconque des revendications 1 à 4, dans laquelle une quantité d'adhérence de l'oxyde de métal est de 2 g/m² ou supérieure et de 50 g/m² ou inférieure, dans laquelle la quantité d'adhérence de l'oxyde de métal est déterminée en divisant la modification en masse du substrat avant et après le revêtement par la surface du substrat.

6. Anode pour électrolyse d'eau selon la revendication 5, dans laquelle la quantité d'adhérence de l'oxyde de métal est de 5 g/m² ou supérieure et de 30 g/m² ou inférieure.

7. Anode pour électrolyse d'eau selon l'une quelconque des revendications 1 à 6, dans laquelle un diamètre de cristallite de l'oxyde de métal est de 5 nm ou supérieur et de 100 nm ou inférieur.

8. Anode pour électrolyse d'eau selon l'une quelconque des revendications 1 à 7, dans laquelle le film mince comprend un oxyde de métal de structure pérovskite dont le réseau unitaire est trigonal.

9. Anode pour électrolyse d'eau selon l'une quelconque des revendications 1 à 8, dans laquelle une surface spécifique de l'anode est de 0,001 m²/g ou supérieure et de 1 m²/g ou inférieure.

10. Anode pour électrolyse d'eau selon l'une quelconque des revendications 1 à 9, dans laquelle une résistance de film déterminée par mesure d'impédance est de 0,01 Ω.cm² ou supérieure et de 2 Ω.cm² ou inférieure.

11. Anode pour électrolyse d'eau selon l'une quelconque des revendications 1 à 10, dans laquelle une épaisseur de la couche d'oxyde de nickel est de 50 nm ou supérieure et de 5 000 nm ou inférieure.

12. Anode pour électrolyse d'eau selon l'une quelconque des revendications 1 à 11, dans laquelle le substrat de nickel poreux est un métal expansé.

13. Cellule électrolytique pour un bain électrolytique bipolaire, comprenant l'anode pour électrolyse d'eau selon l'une quelconque des revendications 1 à 12.

14. Procédé de production d'hydrogène, dans lequel une alimentation en courant variable est fournie à une cellule électrolytique en utilisant l'anode pour électrolyse d'eau selon l'une quelconque des revendications 1 à 12.

15. Procédé de production d'une anode pour électrolyse d'eau selon la revendication 1, comprenant :
l'étape 1 de revêtement d'une surface de substrat de nickel poreux avec une solution comprenant un sel de métal de terre rare et un sel de nickel pour former par là une couche de précurseur ; et
l'étape 2 de calcination de la couche de précurseur à une température de calcination de 400°C ou supérieure à 1 000°C ou inférieure pour former par là un film mince comprenant un oxyde de métal de structure pérovskite.

16. Procédé de production d'une anode pour électrolyse d'eau selon la revendication 15, dans lequel le sel de métal de terre rare comprend un sel de La.

17. Procédé de production d'une anode pour électrolyse d'eau selon la revendication 15 ou 16, dans lequel le sel de métal de terre rare est un nitrate.

18. Procédé de production d'une anode pour électrolyse d'eau selon l'une quelconque des revendications 15 à 17, dans lequel un solvant de la solution comprend au moins un choisi dans le groupe consistant en eau et alcools ayant de 2 à 5 atomes de carbone.

19. Procédé de production d'une anode pour électrolyse d'eau selon l'une quelconque des revendications 15 à 18, dans lequel une concentration du sel de métal de terre rare est de 0,02 mol/l ou supérieure et de 1 mol/l ou inférieure, et une concentration du sel de nickel est de 0,02 mol/l ou supérieure et de 1 mol/l ou inférieure.

20. Procédé de production d'une anode pour électrolyse d'eau selon l'une quelconque des revendications 15 à 19, dans lequel l'étape 1 et l'étape 2 sont réalisées de manière répétitive.
